# EUROPÄISCHE PATENTANMELDUNG

(11) **EP 4 674 824 A1**
(43) Veröffentlichungstag der Anmeldung: **07.01.2026**
(21) Anmeldenummer: 25179629.8
(22) Anmeldetag: 28.05.2025
(51) Int. Cl.: C04B 20/02, C04B 28/00, C04B 40/00

(54) **ZEMENTFREIES BINDEMITTEL FÜR BAUSTOFFE**

(30) Priorität: 02.06.2024 CH 5882024
(71) Anmelder: KIBAG Management AG, 8038 Zürich (CH)
(72) Erfinder: Vogt, Stefan, 8038 Zürich (CH)
(74) Vertreter: IPrime Rentsch Kaelin AG

(57) **Zusammenfassung**

Ein hydraulisches Bindemittel zur Herstellung von Baustoffen, insbesondere Beton, umfasst ein Bindermaterial und einen Aktivator, der dazu geeignet ist, latent-hydraulische Bestandteile des Bindermaterials zu aktivieren, beispielsweise Magnesiumoxid. Das Bindermaterial umfasst einen mineralischen Füllstoff, der aus einem Gemisch aus Betongranulat und Ziegelgranulat gemahlen ist, wobei das Gewichtsverhältnis zwischen Betongranulat und Ziegelgranulat im Wesentlichen in einem Bereich von 45:65 bis 75:25 liegt.

## Beschreibung

### Gebiet der Technik

Die Erfindung betrifft Bindermaterialien zur Herstellung eines hydraulischen Bindemittels, hydraulische Bindemittel zur Herstellung von Baustoffen, Kits zur Herstellung von solchen hydraulischen Bindemitteln, verarbeitbare Baustoffe, insbesondere Beton und Mörtel, sowie Verfahren zur Herstellung von Baustoffen, insbesondere Beton.

### Technologischer Hintergrund

Zement ist ein wichtiger Bestandteil von Beton, dem am häufigsten verwendeten Baustoff, aber auch von Mörtel, Zementputz, Zementestrich und anderen Baustoffen. Zement dient dabei als hydraulisches Bindemittel, welches mit Wasser aushärtet und zusammen mit der Gesteinskörnung sich dauerhaft fest verbindet.

Hauptbestandteil von Zement ist gemahlener Zementklinker (kurz Klinker). Die Herstellung von Klinker durch Brennen von Kalk und Tonmineralien erfolgt bei sehr hohen Temperaturen von bis zu 1450 °C und ist darum energieintensiv und teuer. Zudem werden beim Herstellungsprozess unvermeidlich aus Calciumcarbonat grosse Mengen an klimaschädlichem Kohlendioxid freigesetzt.

Auf verschiedene Art und Weise wird versucht, den Anteil an Klinker im Zement zu reduzieren. Klinker kann als hydraulischen Bindemitteln beispielsweise zum Teil durch latenthydraulische Stoffe (beispielsweise Hüttensand aus Hochofenschlacke) und/oder Puzzolane (beispielsweise natürliches Puzzolan, Flugasche, Silikastaub, Ziegelmehl, getemperte Tone, Schiefer) ersetzt werden, gegebenenfalls in Verbindung mit Aktivatoren.

Aus WO 2023/237186 A1 ist ein Zementersatz bekannt, welches als alternatives hydraulisches Bindemittel zur Herstellung von Beton verwendet werden kann, beinhaltend Magnesiumoxid als Aktivator sowie latenthydraulische beziehungsweise puzzolanischen Stoffe, insbesondere Hüttensand, Ziegelmehl und getempertem Ton, und gegebenenfalls Hexametaphosphate zur Modifikation des Aushärtevorgangs und der Partikeldispersion.

Es besteht ein allgemeines Bedürfnis nach Verbesserungen in diesem Gebiet.

### Darstellung der Erfindung

Aufgabe der Erfindung ist es, ein hydraulisches Bindemittel zur Herstellung von Baustoffen, insbesondere Beton, zur Verfügung zu stellen, welches mindestens einem der oben erwähnten und anderer Nachteile entgegenwirkt. Insbesondere soll ein solches hydraulisches Bindemittel ohne Klinker hergestellt werden können und damit eine wesentlich bessere Bilanz bezüglich Energieverbrauch und Kohlendioxidausstoss aufweisen.

Mit einem solchen hydraulischen Bindemittel hergestellte Baustoffe sollen Eigenschaften aufweisen, welche mit den Eigenschaften von mit herkömmlichen, zementbasierten Bindemitteln hergestellten Baustoffen vergleichbar sind.

Diese und andere Aufgaben werden gelöst durch ein erfindungsgemässes Bindermaterial zur Herstellung eines hydraulischen Bindemittels, ein erfindungsgemässes hydraulisches Bindemittel zur Herstellung von Baustoffen, ein Kit zur Herstellung eines solchen hydraulischen Bindemittels, einen verarbeitbaren Baustoff, insbesondere Beton, sowie ein Verfahren zur Herstellung eines Baustoffs, insbesondere Beton, gemäss den unabhängigen Ansprüchen. Weitere vorteilhafte Ausführungsformen gehen ausserdem aus den abhängigen Ansprüchen und der Beschreibung hervor.

In der vorliegenden Beschreibung werden Massenanteile in Gewichtsprozent angegeben, abgekürzt als Gew.% oder % w/w.

Die erfindungsgemässe Lösung kann durch verschiedene, jeweils für sich vorteilhafte und, sofern nicht anders ausgeführt, miteinander kombinierbare Ausgestaltungen weiter verbessert werden. Auf diese Ausführungsformen und die mit ihnen verbundenen Vorteile ist im Folgenden eingegangen.

Ein erster Aspekt der Erfindung betrifft ein Bindermaterial zur Herstellung eines hydraulischen Bindemittels.

Ein solches erfindungsgemässes Bindermaterial umfasst einen mineralischen Füllstoff, der aus einem Gesteinskörnungsgemisch aus Betongranulat und Ziegelgranulat gemahlen ist, wobei das Gewichtsverhältnis zwischen Betongranulat und Ziegelgranulat im Wesentlichen in einem Bereich von 45:65 bis 75:25 liegt.

Vorteilhaft liegt bei einem solchen erfindungsgemässen Bindermaterial das Gewichtsverhältnis zwischen Betongranulat und Ziegelgranulat im Wesentlichen in einem Bereich von 55:45 bis 65:35, besonders vorteilhaft bei 60:40.

Die Partikelgrössenverteilung des mineralischen Füllstoffs eines erfindungsgemässen Bindermaterials weist vorteilhaft einen Wert von *d*₉₇ < 120 µm auf, besonders vorteilhaft einen Wert von *d*₉₇ < 100 µm.

Vorteilhaft ist das Betongranulat und/oder das Ziegelgranulat, aus welchem der mineralische Füllstoff eines erfindungsgemässen Bindermaterials hergestellt ist, aus Rückbauten gewonnen.

Die Herstellung des Bindermaterials aus recycelten Baustoffen führt zu einer gesamthaft guten Energiebilanz, da die graue Energie in dem entsprechenden Materialien nochmals genutzt werden kann.

In einem erfindungsgemässen Bindermaterial beträgt der Phasenanteil von Quarz im mineralischen Füllstoff vorteilhaft mindestens 30 Gew.%.

In einem erfindungsgemässen Bindermaterial beträgt der Phasenanteil von Kalzit im mineralischen Füllstoff vorteilhaft mindestens 40 Gew.%.

In einem erfindungsgemässen Bindermaterial beträgt der Phasenanteil von Albit im mineralischen Füllstoff vorteilhaft mindestens 8 Gew.%.

In einem erfindungsgemässen Bindermaterial beträgt der Phasenanteil von Muscovit im mineralischen Füllstoff vorteilhaft mindestens 3 Gew.%.

Ein zweiter Aspekt der Erfindung betrifft ein hydraulisches Bindemittel zur Herstellung von Baustoffen, insbesondere Beton.

Ein solches erfindungsgemässes hydraulisches Bindemittel umfasst ein erfindungsgemässes Bindermaterial, und einen Aktivator, der dazu geeignet ist, latent-hydraulische Bestandteile des Bindermaterials zu aktivieren.

Aus der Kombination des Aktivators und den latent-hydraulischen Bestandteilen des Bindermaterials, nämlich insbesondere dem mineralischen Füllstoff aus gemahlenem recycliertem Gesteinskörnungsgemisch, resultiert direkt ein hydraulisches Bindemittel, welches ohne einen Zusatz von Klinker auskommt.

Vorteilhaft ist bei einem erfindungsgemässen hydraulischen Bindemittel der Aktivator ausgewählt aus einer Gruppe bestehend aus Magnesiumoxid, Magnesiumhydroxid, Calciumoxid, Calciumhydroxid, Natriumhydroxid, Kaliumhydroxid, und Mischungen davon.

Besonders vorteilhaft ist der Aktivator eines erfindungsgemässen hydraulischen Bindemittels Magnesiumoxid.

Eine vorteilhafte Variante eines erfindungsgemässen hydraulischen Bindemittels umfasst eine Phosphatverbindung, insbesondere eine Polyphosphatverbindung, beispielsweise Natriumhexametaphosphat.

Eine andere vorteilhafte Ausführungsform eines erfindungsgemässen hydraulischen Bindemittels umfasst einen Calciumcarbonat-Füllstoff, wobei das Gewichtsverhältnis zwischen dem Bindermaterial und dem Calciumcarbonat-Füllstoff ≤10:1, vorteilhafter ≤5:1, und besonders vorteilhaft 3:1 beträgt.

Der Calciumcarbonat-Füllstoff wird vorzugsweise aus gemahlenem Kalkstein hergestellt. Vorteilhaft enthält der entsprechende Kalkstein mindestens 95 Gew.% Calciumcarbonat.

Bei einer vorteilhaften Variante eines solchen hydraulischen Bindemittel besteht der Calciumcarbonat-Füllstoff aus drei Anteilen mit verschiedenen Partikelgrössenverteilungen, mit einem ersten Anteil mit *d*₉₇ < 10 µm, mit einem zweiten Anteil mit *d₉₇* < 45 µm, und einem dritten Anteil mit *d*₉₇ < 63 µm.

Besonders vorteilhaft liegt dabei bei einem solchen hydraulischen Bindemittel das Gewichtsverhältnis der drei Anteile des Calciumcarbonat-Füllstoffs jeweils paarweise im Wesentlichen in einem Bereich von 1.2:1 bis 0.8:1.

Ein dritter Aspekt der Erfindung betrifft ein Kit zur Herstellung eines hydraulischen Bindemittels zur Herstellung von Baustoffen, insbesondere Beton.

Ein solches erfindungsgemässes Kit zur Herstellung eines hydraulischen Bindemittels umfasst eine Menge an erfindungsgemässem Bindermaterial, und davon getrennt eine

Menge eines Aktivators, der dazu geeignet ist, latent-hydraulische Bestandteile des Bindermaterials zu aktivieren.

Das hydraulische Bindemittel eines erfindungsgemässen Kits ist vorteilhaft ein erfindungsgemässes hydraulisches Bindemittel mit Calciumcarbonat-Füllstoff, wobei der Calciumcarbonat-Füllstoff getrennt vorliegt.

Ein vierter Aspekt der Erfindung betrifft einen verarbeitbaren Baustoff, insbesondere Beton.

Ein solcher erfindungsgemässer verarbeitbarer Baustoff umfasst ein erfindungsgemässes hydraulisches Bindemittel und/oder ein hydraulisches Bindemittel hergestellt mit einem erfindungsgemässen Kit zur Herstellung eines hydraulischen Bindemittels, und Gesteinskörnung, und Zugabewasser.

Vorteilhaft liegt bei einem erfindungsgemässen verarbeitbaren Baustoff das Gewichtsverhältnis zwischen hydraulischem Bindemittel und Gesteinskörnung im Wesentlichen in einem Bereich von 1:4 bis 1:5, vorteilhaft im Wesentlichen in einem Bereich von 1:4.0 bis 1:4.3.

Ein fünfter Aspekt der Erfindung betrifft ein Verfahren zur Herstellung eines Baustoffs, insbesondere Beton.

Ein solches erfindungsgemässes Verfahren umfasst die Schritte:
- Bereitstellung einer bestimmten Menge Gesteinskörnung, einer bestimmten Menge eines erfindungsgemässen hydraulischen Bindemittels, und einer bestimmten Menge Zugabewasser, wobei allenfalls vorhandener Calciumcarbonat-Füllstoff des hydraulischen Bindemittels separat bereitgestellt wird;
- optional, falls Calciumcarbonat-Füllstoff vorhanden ist, Trockenmischen der Gesteinskörnung und des Calciumcarbonat-Füllstoffs; und
- Nassmischen des Zugabewassers, des Aktivators und des Bindermaterials des hydraulischen Bindemittels, und der Gesteinskörnung inklusive allenfalls beigemischtem Calciumcarbonat-Füllstoff.

Vorteilhaft wird bei einem erfindungsgemässen Verfahren der Aktivator und das Bindermaterial des hydraulischen Bindemittels separat bereitgestellt.

Weitere Aspekte der vorliegenden Erfindung ergeben sich auch aus der nachfolgenden Beschreibung

### Kurze Beschreibung der Zeichnungen

Zum besseren Verständnis der vorliegenden Erfindung wird nachfolgend auf die Zeichnungen Bezug genommen. Diese zeigen lediglich Ausführungsbeispiele des Erfindungsgegenstands.
- Figur 1: zeigt die Partikelgrössenverteilung (Siebkurve) der sechs Materialproben.
- Figur 2: zeigt die Röntgen-Pulverdiffraktogramme der sechs Materialproben, (a) Proben K1 und K2, (b) Proben K3 und K4, (c) Proben K5 und K6.
- Figur 3: zeigt die quantitativ analysierten Röntgen-Pulverdiffraktogramme von (a) Materialprobe K5 und (b) Materialprobe K6.
- Figur 4: zeigt Testresultate zum Karbonatisierungswiderstand nach SIA 262/1 Anhang I.
- Figur 5: zeigt Testresultate zur Würfeldruckfestigkeit, Druckfestigkeit 28d nach Prüfnorm SN EN 12390-3.
- Figur 6: zeigt Testresultate zur Zylinderdruckfestigkeit, Druckfestigkeit 28d nach Prüfnorm SN EN 12390-3.
- Figur 7: zeigt Testresultate zum Elastizitätsmodul 28d nach Prüfnorm SN EN 12390-5.
- Figur 8: zeigt Testresultate zum Biegezugfestigkeit 28d nach Prüfnorm SN EN 12390-5.
- Figur 9: zeigt tabellarisch die Zusammensetzung verschiedener Betonproben.

### Wege zur Ausführung der Erfindung

Die im Folgenden gegebenen Beispiele dienen der besseren Veranschaulichung der Erfindung, sind jedoch nicht dazu geeignet, die Erfindung auf die hierin offenbarten Merkmale zu beschränken.

### Erfindungsgemässer Beton

Die gültigen Normen und Standards im Betonbau lassen es heute zu, in den Zusammensetzungen von Betonen sekundäre mineralische Baustoffe bis zu einem definierten Grenzwert einzusetzen. Bei einem Ausführungsbeispiel eines erfindungsgemässen Betons, wie es nachfolgend beschrieben wird, wird Zement als Bindemittel zu 100 Gew.% durch ein klinkerloses Bindemittel mit einem Aktivator und einen erfindungsgemässen Bindermaterial ersetzt. Ein solcher erfindungsgemässer Beton erreicht eine Festigkeitsklasse nach Schweizer Norm SN EN 206:2013+A1:201 «Beton - Festlegung, Eigenschaften, Herstellung und Konformität» (Tabelle 12 - Druckfestigkeitsklasse für Normal - und Schwerbeton) von bis zu C 30/37.

Ein erfindungsgemässer Beton entspricht dabei entspricht aufgrund der grundlegenden und zusätzlichen Anforderungen einem sog. Beton nach Zusammensetzung (vgl. Kap. 6.3.1. in SN EN 206:2013+A1:201).

Ein Ausführungsbeispiel eines erfindungsgemässen Betons setzt sich für 1 m³ Beton wie in Tabelle 1 gezeigt zusammen (ohne Berücksichtigung des Zugabewassers):

**Tabelle 1:**

| **Bestandteil** | **Masse [kg]** | **Masseanteil [Gew.%]** |
|---|---|---|
| Feine Gesteinskörnung 0/4 mm | 869.00 | 38.70 |
| Grobe Gesteinskörnung 4/8 mm | 453.00 | 20.17 |
| Grobe Gesteinskörnung 8/16 mm | 489.00 | 21.78 |
| Aktivator | 231.00 | 10.29 |
| Mineralischer Füllstoff | 154.00 | 6.86 |
| Kalksteinmehl *d*₉₇ < 10 µm | 15.50 | 0.69 |
| Kalksteinmehl *d*₉₇ < 45µm | 18.50 | 0.82 |
| Kalksteinmehl *d*₉₇ < 63 µm | 15.50 | 0.69 |

Die drei Gesteinskörnungen werden wie folgt hergestellt:
a) Kiesentnahme direkt ab Wand oder sprengtechnisch aus dem Berg;
b) Zwischentransport zu Transportband oder Übergabebunker;
c) Allfällige Vorabsiebung des Haufwerkes, beispielsweise bei ≤ 40 mm;
d) Vorbrechen Haufwerk ≥ 40 mm auf Grösstkorn 120 mm;
e) Nass- oder Trockensiebung auf gewünschtes Kornband dₘᵢₙ/Dₘₐₓ (vgl. Europäische Norm EN 12620:2002/AC, Kapitel 4.3, Tab. 2);
f) Lagerung auf Halde oder Silos.

Bei dem von der Firma Oxara AG hergestellten Aktivator handelt es sich im Wesentlichen um Magnesiumoxid, wie es in WO 2023/237186 A1 verwendet wird, und wie es als Aktivator auch im Produkt «Oxacrete Oulesse» der Firma Oxara AG enthalten ist. Die Korngrösse des Aktivators beträgt Dmax < 90 µm. Magnesiumoxid kann beispielsweise durch Calcinierung von Magnesiumhydroxid gewonnen werden, wobei dabei im Gegensatz zu Klinker kein Kohlendioxid freigesetzt wird und der Prozess bei wesentlich tieferen Temperaturen stattfindet, ≤ ca. 600 °C, was den Energiebedarf erheblich senkt.

Das verwendete erfindungsgemässe Bindermaterial wird im nachfolgenden Abschnitt detailliert behandelt.

Die drei verwendeten Kalksteinmehle bilden zusammen den Calciumcarbonat-Füllstoff und bestehen vorzugsweise zu mindestens 95% aus Calciumcarbonat. Durch Vorversuche konnte festgestellt werde, dass eine geeignete Beigabemenge in den drei Grössenbereichen eine deutlich bessere Verarbeitbarkeit des frischen Betons mit sich bringt.

Verwendet wurde Kalkstein aus dem Steinbruch Schollberg der Firma KIBAG Baustoffe Schollberg AG.

Die Herstellung der Kalksteinmehle erfolgte mittels einer Pendelmühle PM05 der Firma Neumann & Esser, mit einem 3-pendeligem Rotor DD zur Zerkleinerung und einem zylindrischen Sichterrad. Das Aufgabegut wird vom Silo über eine Bandwaage durch eine Rohrleitung zur Pendelmühle dosiert zugeführt. Das durch eine Zellenradschleuse aufgegebene Material wird von den Schaufeln vom Mühlenboden zwischen Mahlrolle und Mahlring transportiert. Unter der Einwirkung von Druck- und Scherbeanspruchung erfolgt die Vermahlung des Aufgabegutes zwischen den Mahlrollen und dem Mahlring. Systemluft strömt von unten in die Mühle und fördert das gemahlene Gut zum oberhalb der Mühle angeordneten Sichter. Im Sichterrad wirken bei der Sichtung zwei entgegengesetzte Kräfte auf die Produktpartikel, nämlich die Zentrifugalkraft, welche durch die Rotation des Sichterrades entsteht, und die Schleppkraft der Luft, welche durch das Sichterrad gesaugt wird. Die Trenngrenze der Sichtung wird beeinflusst durch die Rotationsgeschwindigkeit des Sichterrades und die Durchströmungsgeschwindigkeit der Luft. Nur Partikel, welche klein genug sind, können vom Luftstrom entgegen der Zentrifugalkraft durch das rotierende Sichterrad transportiert werden. Luftvolumenstrom, Füllungsgrad und Verweilzeit des Produktes in der Sichtzone sind ausschlaggebende Faktoren für eine optimale Sichtung. Die Mahlfeinheit kann über die Sichterdrehzahl stufenlos verändert werden. Das Fertiggut wird mit der Luft durch das Sichterrad zum Austrittstutzen gesaugt, während das Grobgut vom Sichterrad abgewiesen und zur weiteren Zerkleinerung entlang der Wandung des oberen Mühlengehäuses zur Mahlzone zurückgeführt wird.

Ausgangsmaterial: 20 t gebrochener Kalkstein mit einer Aufgabegrösse von 0 - 20 mm und einer Feuchte von 0,75 - 2,3 Gew.% und einer Schüttdichte von 1612 kg/m³.

Die Mühlen-Anlage mit den in der nachfolgenden Tabelle 2 aufgeführten Parametern gefahren.

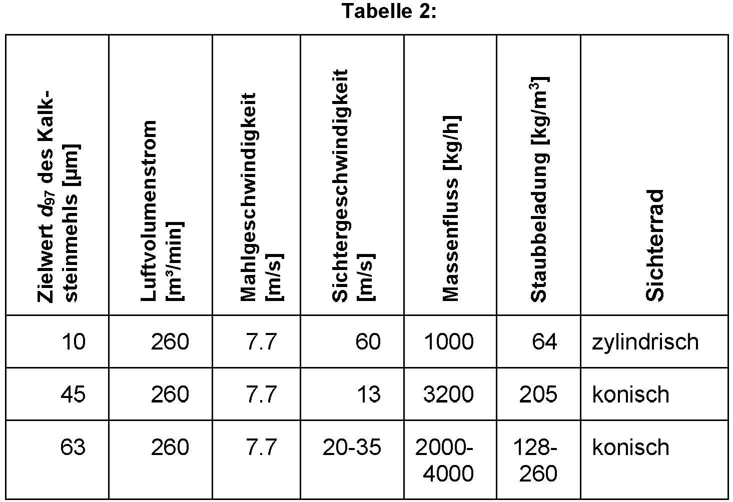

Die resultierende Partikelgrösse wurde mittels einem Rehwum-Luftstrahlsieb LPS 2110 gemessen und/oder mit einem Malvern 2000 Laserbeugungsspektrometer trocken analysiert. Die entsprechenden Resultate sind in der nachfolgenden Tabelle 3 gezeigt.

**Tabelle 3:**

| **Zielwert *d*₉₇ des Kalksteinmehls [µm]** | **Malvern Laserbeugungsspektrometer** | | | **Rehwum-Luftstrahlsieb** | |
|---|---|---|---|---|---|
| | ***d*₅₀ [µm]** | ***d*₉₀ [µm]** | ***d*₉₇ [µm]** | **Anteil [%] < 45 µm** | **Anteil [%] < 63 µm** |
| 10 | 2.94 | 6.23 | 8.85 | | |
| 45 | 5.4 | 39.5 | 58.7 | 97.7 % | |
| 63 | | | | | 98.7 % |

### Erfindungsgemässes Bindermaterial

Bei dem erfindungsgemässen Bindermaterial handelt es sich um eine vorteilhafte Mischung aus sekundären (also rezyklierten) Baustoffen, welche aus bei Rückbauten anfallendem Material gewonnen werden (vgl. dazu SIA Merkblatt 2030 «Recyclingbeton», Ausgabe 2010), nämlich aus Betonabbruch-Körnern (R_{c}) aus Beton, Betonprodukten, Mörtel und Mauersteinen aus Beton gemäss Norm SN EN 933-11 («Betongranulat») und Ziegelabbruch-Körnern R_{b} aus Mauerziegeln und Dachziegeln gemäss Norm SN EN 933-11 («Ziegelgranulat»).

Das erfindungsgemässe Bindermaterial umfasst einen mineralischen Füllstoff, der im gezeigten Beispiel aus einem Mischgranulat aus 60 Gew.% Betongranulat R_{c} und 40 Gew.% Ziegelgranulat R_{b} hergestellt wird. Dies entspricht einem Mischgranulat, wie es gemäss SIA Merkblatt 2030 «Recyclingbeton», Ausgabe 2010, Tabelle 2 als Gesteinskörnung zur Herstellung von Recycling-Beton RC-M verwendet werden kann.

Das erfindungsgemässe Bindermaterial besteht somit zu 100 Gew.% aus rezyklierten Material.

Zur Partikelgrösse des mineralischen Füllstoffs wird auf die untenstehenden Analyseergebnisse zu K5 und K6 verwiesen.

Aufgrund seiner Bestandteile ist das erfindungsgemässe Bindermaterial latent hydraulisch, und wirkt darum im Zusammenspiel mit dem Magnesiumoxid-Aktivator wie ein herkömmliches klinker-basiertes Bindemittel, also einem herkömmlichen Zement.

Das erfindungsgemässe Bindermaterial wird wie folgt hergestellt:
a) Vorkonfektionierung des gewünschten Mischungsverhältnisses von Betonabbruchmaterial und Ziegelabbruchmaterial;
b) Vermahlung des vorkonfektionierten Materials auf ein Grösstkorn Dₘₐₓ von 22 mm
c) Feinvermahlung des Mahlgutes auf das gewünschte Kornband;
d) Transport mit Silowagen zur Verwendungsstelle inkl. pneumatische Förderung in dazu geeignete Bindemittelsilos.

Um die Eigenschaften der erfindungsgemässen Bindermaterials zu untersuchen, wurden verschiedene Materialproben analysiert und verglichen, nämlich die folgenden getestete Materialproben:
**K1:** Ziegelmehl; Eigenschaften: pulverförmig, rötlich, trocken, Partikelgrösse mit blossem Auge nicht bestimmbar; Herstellung: Mahlgut 1-2 mm Ziegelwerk, Vermahlung in Laborscheibenmühle bei 440 U/min.
**K2:** Ziegelmehl; Eigenschaften: pulverförmig, rötlich, trocken, Partikelgrösse mit blossem Auge nicht bestimmbar; Herstellung: Mahlgut 0-2 mm Ziegelwerk, andere Charge als K1, Vermahlung in Laborscheibenmühle bei 440 U/min.
**K3:** Betongranulat; Eigenschaften: pulverförmig, gräulich, trocken, Partikelgrösse mit blossem Auge nicht bestimmbar; Herstellung: Mahlgut 0-4 mm Betonabbruch R_{c}, Vermahlung in Laborscheibenmühle bei 440 U/min.
**K4:** Betongranulat; Eigenschaften: pulverförmig, gräulich, trocken, Partikelgrösse mit blossem Auge nicht bestimmbar; Herstellung: Mahlgut 0-4 mm Betonabbruch R_{c}, andere Charge als K3, Vermahlung in Laborscheibenmühle bei 440 U/min.
**K5:** erfindungsgemässes Bindermaterial; Eigenschaften: pulverförmig, gräulich, etwas dunkler als K3 und K4, trocken, Partikelgrösse mit blossem Auge nicht bestimmbar; Herstellung: Mahlgut 0-4 mm mit 60 Gew.% Betongranulat R_{C} und 40 Gew.% Ziegelgranulat R_{b}, Vermahlung in Grossanlage, Pendelmühle analog zu Kalksteinmehlen, bei 720 U/min.
**K6:** erfindungsgemässes Bindermaterial; Eigenschaften: pulverförmig, gräulich, etwas dunkler als K3 und K4, trocken, Partikelgrösse mit blossem Auge nicht bestimmbar; Herstellung: Mahlgut 0-4 mm mit 60 Gew.% Betongranulat R_{C} und 40 Gew.% Ziegelgranulat R_{b}, andere Charge als K5, Vermahlung in Grossanlage, Pendelmühle analog zu Kalksteinmehlen, bei 720 U/min.

Es wurde mit einem Pyknometer die Rohdichte der verschiedenen Materialproben bestimmt, sowie mit einem Blaine-Gerät die spezifische Oberfläche nach DIN 1G6-6. Die Resultate sind in der nachfolgenden Tabelle 4 dargestellt:

**Tabelle 4:**

| ***Materialprobe*** | ***Rohdichte [g*/*cm³]*** | ***Spezifische Oberfläche [cm²*/*g]*** |
|---|---|---|
| K1 | 2.92 | 5295 |
| K2 | 2.88 | 4303 |
| K3 | 2.72 | 4858 |
| K4 | 2.67 | 4481 |
| K5 | 2.64 | 5256 |
| K6 | 2.55 | 6315 |

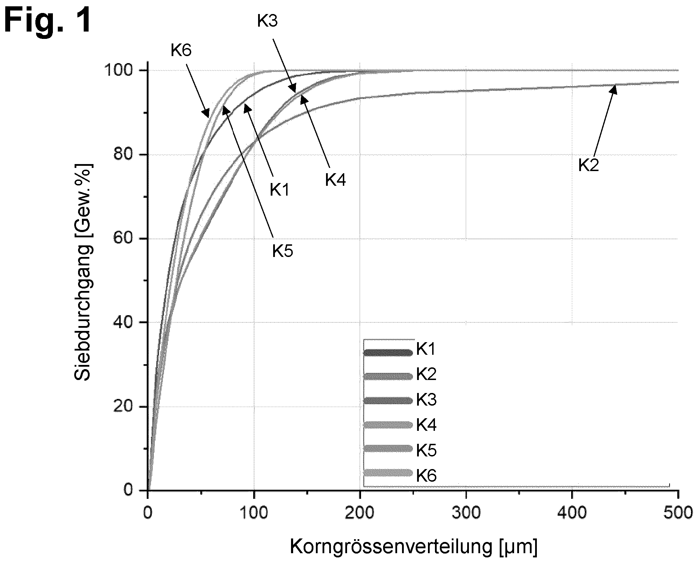

Die Partikelgrössenverteilung wurde ebenfalls bestimmt, wie in Figur 1 dargestellt. Daraus wird ersichtlich, dass für die beiden Proben des erfindungsgemässen Bindermaterials *d*₉₇ < 100 µm.

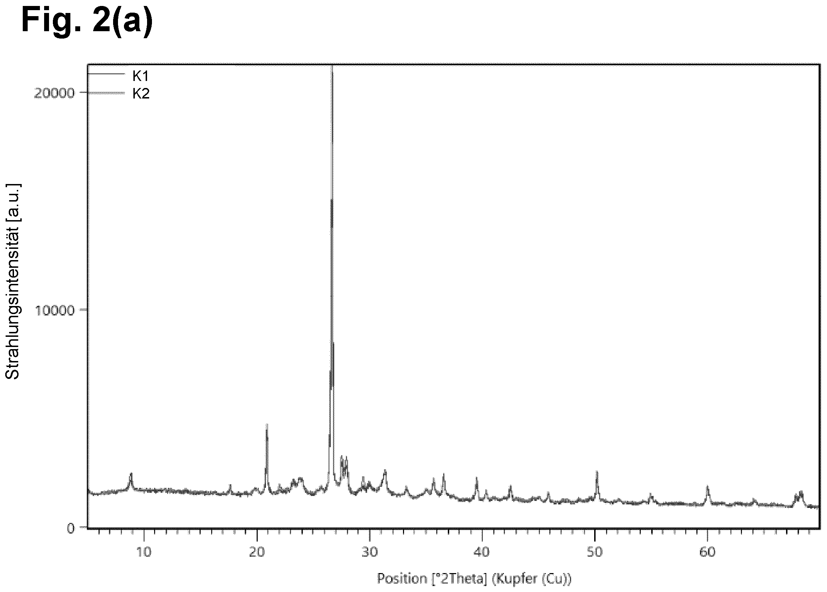

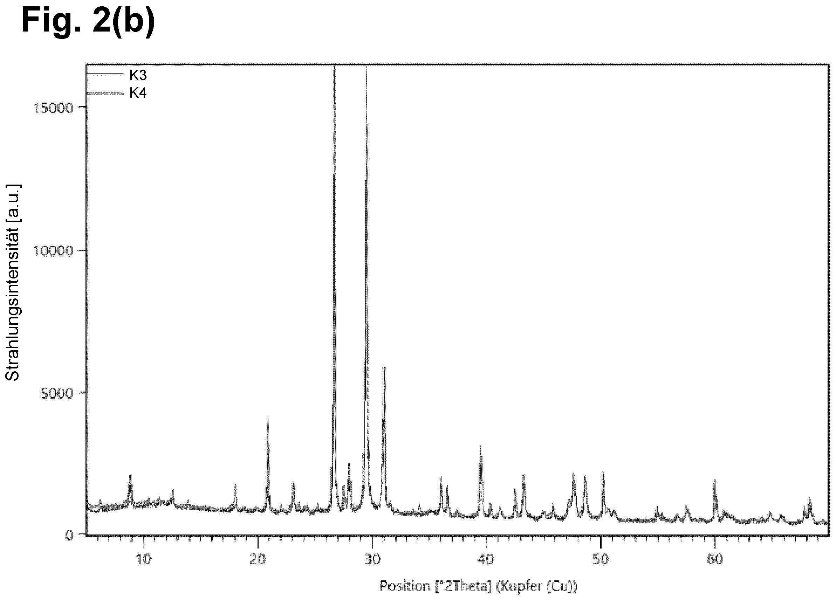

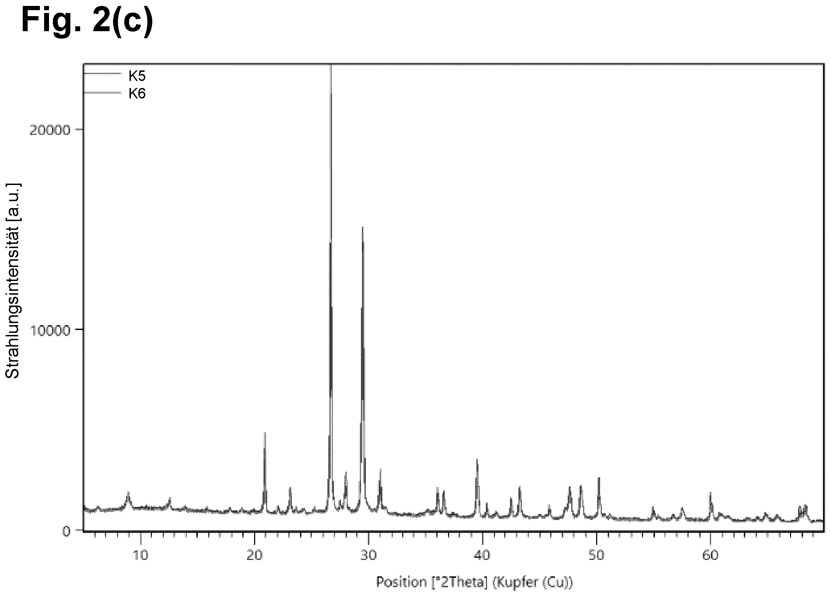

Zu Identifikation möglicher gemeinsamer Phasen wurden von den Materialproben Röntgen-Pulverdiffraktogramme aufgenommen, die in Figur 2 gezeigt sind. Die Diffraktogramme der Proben K1/K2 (aus Ziegelgranulat) beziehungsweise K3/K4 (aus Betongranulat) beziehungsweise K5/6 (erfindungsgemässes Bindermaterial) sind jeweils unter sich sehr ähnlich (Peaklage, Höhe, direkte Überlappung der Pattern). Die Hauptphasen der Probenpaare sind daher vermutlich identisch. Nebenphasen und Phasenanteile können sich allerdings unterscheiden.

Anschliessend wurden die mineralogische Phasenzusammensetzung und die vorkommenden Hauptelemente der Proben qualitativ bestimmt (vgl. Tabelle 5). Die identifizierten Phasen sind für die vorliegenden Proben schlüssig. Die Mg-haltige Phase, welche die Proben K3 und K4 unterscheidet, ist vermutlich Dolomit. Vermikulit, der in den Proben K3 - K6 vorkommt, ist vermutlich auf den Rückbau zurückzuführen, da dieses Tonmineral oftmals Verwendung bei Schall- und Wärmedämmung sowie beim Brandschutz findet.

**Tabelle 5:**

| ***Materialprobe*** | ***Mineralogische Phasenzusammensetzung (XRD, qualitativ)*** | ***Vorkommende Hauptelemente (RFA, qualitativ)*** |
|---|---|---|
| K1 | Option A: Quarz, Anorthit, Illit, Hämatit | Mg, Al, Si, S, Ca, Fe, O |
| | Option B: Quarz, Anorthit, Muscovit (Fe-haltig) | |
| K2 | Quarz, Anorthit, Illit, Wollastonite (Fe-haltig) | Mg, Al, Si, S, Ca, Fe, O |
| K3 | Albit, Quarz, Muscovit, Pseudowollastonit, Calzit, ggf. Spuren von Vermikulit | Al, Si, S, Ca, Fe, O |
| K4 | Albit, Quarz, Muscovit, Pseudowollastonit, Calzit, Dolomit, ggf. Spuren von Vermikulit | Mg, Al, Si, S, Ca, Fe, O |
| K5 | Albit, Quarz, Muscovit, Pseudowollastonit, Calzit, Dolomit, ggf. Spuren von Vermikulit | Mg, Al, Si, S, Ca, Fe, O |
| K6 | Albit, Quarz, Muscovit, Pseudowollastonit, Calzit, ggf. Spuren von: Dolomit, Vermikulit | Al, Si, S, Ca, Fe, O |

Die verschiedenen Mineralphasen lassen sich wie in Tabelle 6 aufgezeigt erläutern:

**Tabelle 6:**

| ***Mineral*** | ***Chemische Formel*** | ***Mineralgruppe*** |
|---|---|---|
| Quarz | SiO₂ | Silikate |
| Anorthit | Ca(Al₂Si₂O₈) | Feldspäte |
| Albit | Na(AlSi₃O₈) | Feldspäte |
| Illit | K_{0,65}Al_{2,0}Al_{0,65}Si_{3,35}O₁₀(OH)₂ | Tonminerale |
| Muscovit | KAl₂[(OH,F)₂\|AlSi₃O₁₀] | Glimmer |
| Vermikulit | (Mg_{0,5},Ca_{0,5},Na,K)_{0,7}(Mg,Fe,Al)₃[(OH)₂\|(Al,Si)₂Si₂O₁₀]·4H₂O | Tonminerale |
| Wollastonit | CaSiO₃ | Silikate |
| Kalzit | CaCO₃ | Karbonate |
| Dolomit | CaMg(CO₃)₂ | Karbonate |
| Hämatit | Fe2O₃ | Oxide |

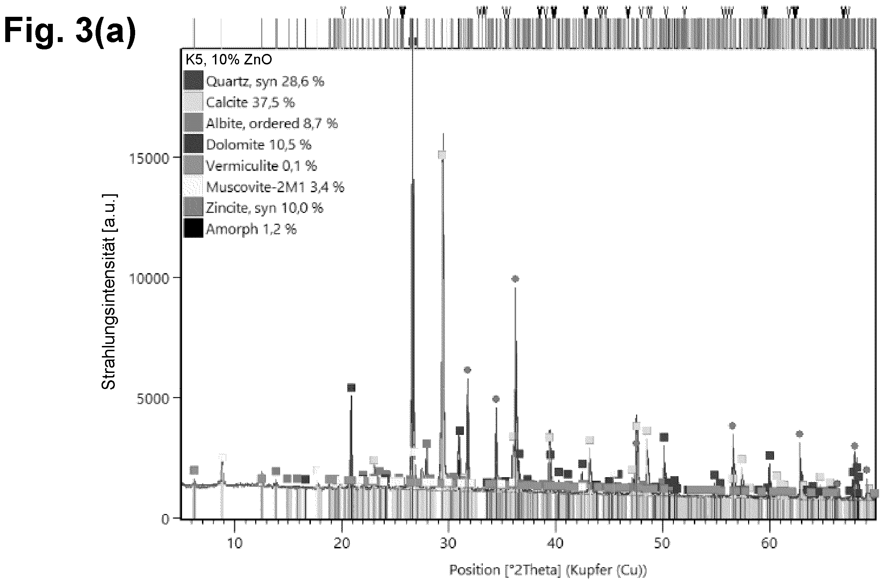

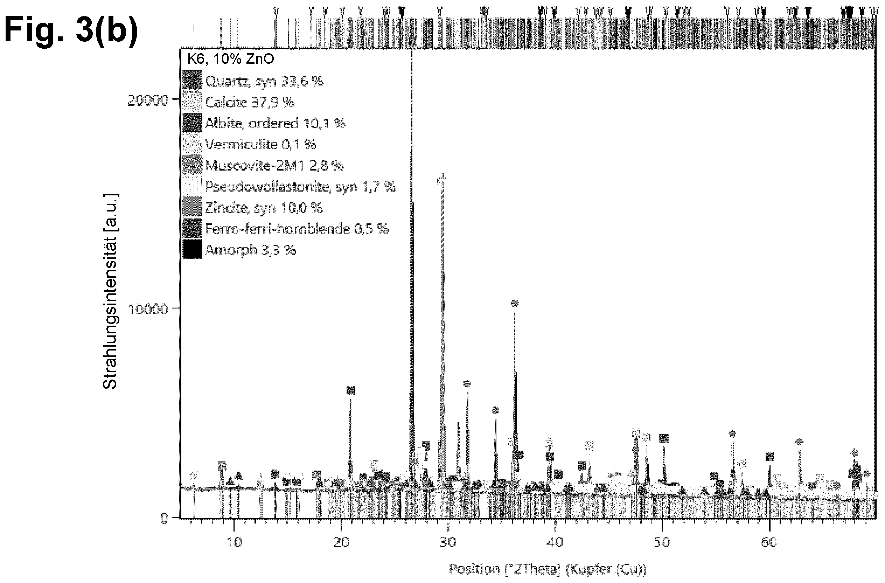

Für die Proben K5 und K6 wurden die Phasenanteile zudem auch quantitativ bestimmt (vgl. Figur 3). Die entsprechenden Ergebnisse sind in der nachfolgenden Tabelle 7 zusammengefasst:

**Tabelle 7:**

| ***Phase*** | ***Phasenanteil [Gew.%]*** | |
|---|---|---|
| | ***K5*** | ***K6*** |
| Amorph | 1.3 | 3.7 |
| Quartz | 31.8 | 37.3 |
| Kalzit | 41.7 | 42.1 |
| Albit | 9.7 | 11.2 |
| Dolomit | 11.7 | 0 |
| Pseudowollastonit | 0 | 1.9 |
| Muscovit | 3.8 | 3.1 |
| Vermiculit | 0.1 | 0.1 |
| Amphibol | 0 | 0.6 |
| Summe | 100 | 100 |

### Herstellung eines erfindungsgemässen Betons

Die Herstellung des genannten Ausführungsbeispiels eines erfindungsgemässen Betons kann beispielsweise wie in der in der nachfolgenden Tabelle 8 gezeigt erfolgen:

**Tabelle 8:**

| **Arbeitsschritt** | **Zeit kumuliert [s]** |
|---|---|
| Start Anlage | 0 |
| Verwiegung Gesteinskörnungen in geeichte Waage | 0-60 |
| Verwiegung Aktivator in geeichte Waage | 0-60 |
| Verwiegung erfindungsgemässes Bindermaterial in geeichte Waage | 0-60 |
| Verwiegung Zugabewasser (Frischwasser) in geeichte Waage | 0-60 |
| Beigabe des Calciumcarbonat-Füllstoffs in Form der drei Kalksteinmehle (Handbeigabe, von Hand gewogen) | 30-60 |
| Entleerung Waage Gesteinskörnung | 60-70 |
| Trockenmischen | 70-100 |
| Entleerung Waage erfindungsgemässes Bindermaterial und Aktivator | 80-120 |
| Entleerung Waage Zugabewasser | 120-140 |
| Minimale Nassmischzeit | 240-260 |
| Mischer Entleerung | 260 |

Einbau: Das Material wird auf Baustelle geliefert mit einem Ausbreitmass zwischen 40-50 cm. Das Einbringen erfolgt wie bei konventionellem Beton (auf Zementbasis). Verdichtet wird mit Vibrationsnadel oder Schalungsrüttler.

Nachbehandlung: Analog zu konventionellem Beton. Während den ersten 30 Tage müssen Temperaturen unter 0° C verhindert werden.

Ausschalen: Möglich nach 4 Tagen, für Wandhöhen bis zu 3 m. Tage werden in Abhängigkeit der Durchschnittstemperatur *T* gezählt: *T <* 10°C: die Tage werden nicht gezählt. 10 °C ≤ *T* ≤ 15 °C: die Tage werden halb gezählt. *T* > 15 °C: die Tage werden voll gezählt.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen.

Zusätzlich werden in der Beschreibung verschiedene Referenzen zitiert, deren Offenbarungsgehalt hiermit in deren Gesamtheit durch Referenz in die Beschreibung mit aufgenommen wird.

### Testresultate

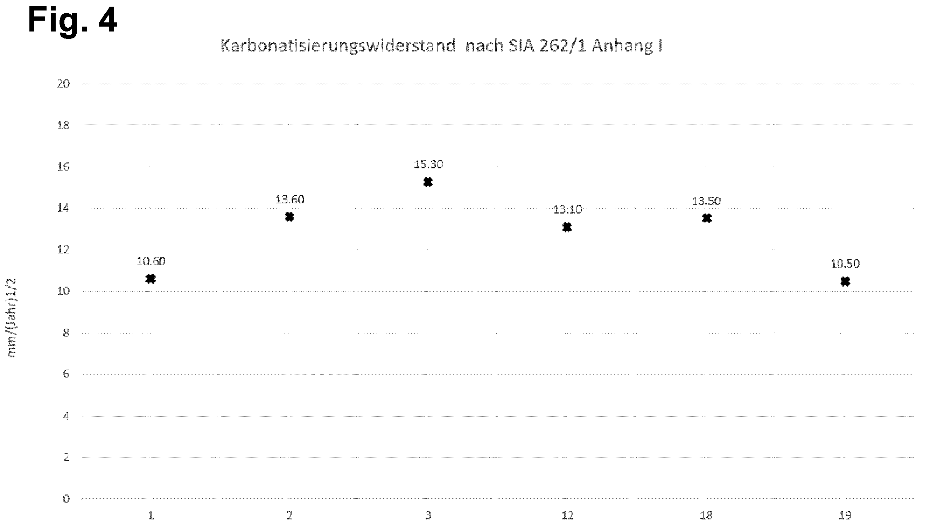

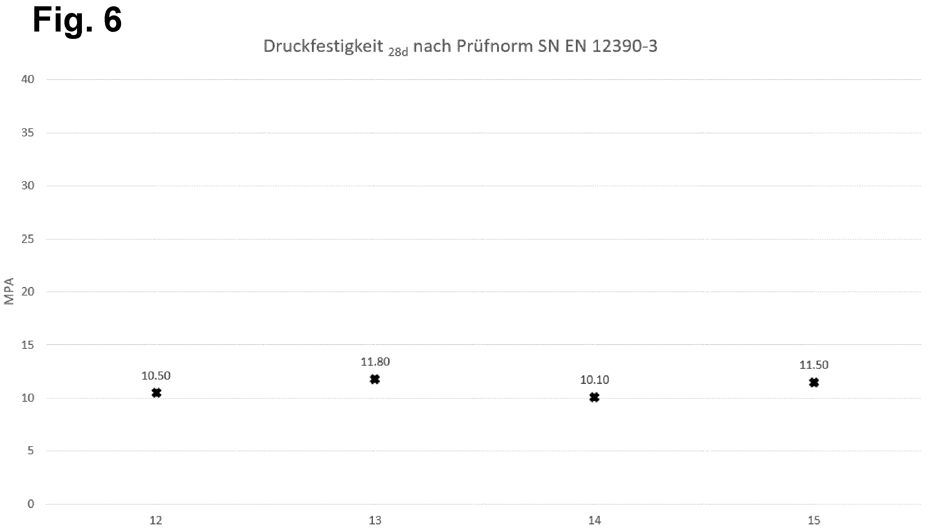

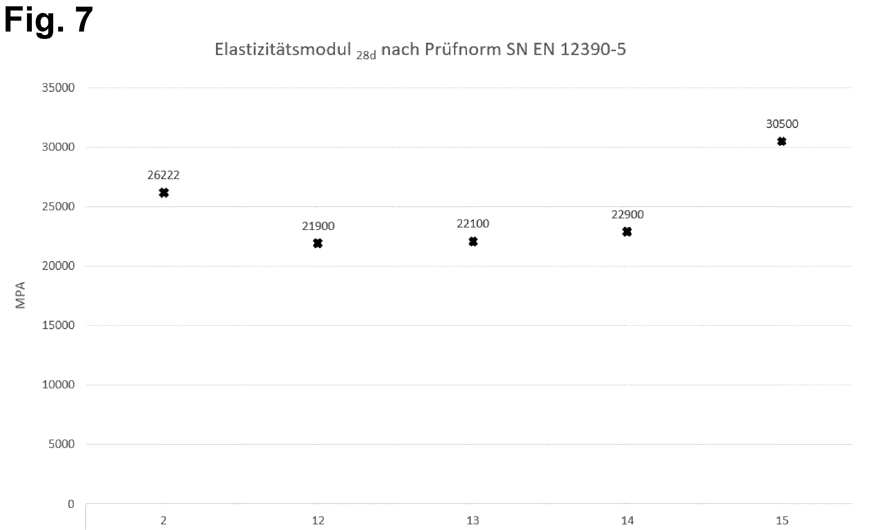

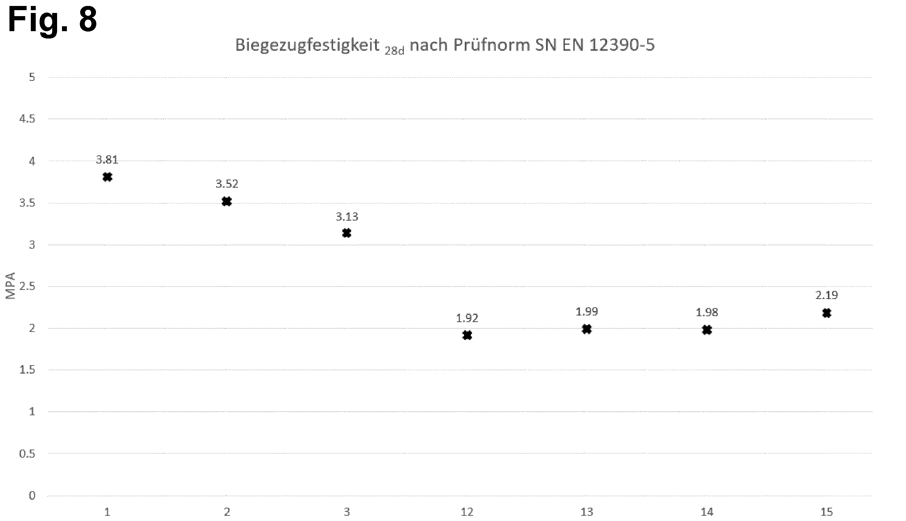

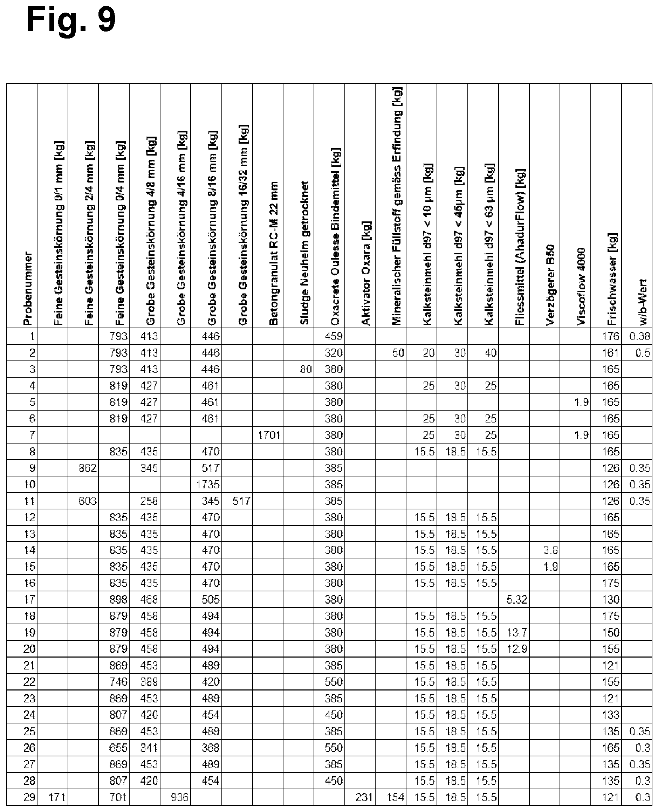

Es wurden verschiedene Betonproben untersucht, insbesondere den Karbonatisierungswiderstand nach 28 d gemäss SIA 262/1 Anhang I, die Druckfestigkeit nach 28 d gemäss Prüfnorm SN EN 12390-3 (Würfeldruckfestigkeit und Zylinderdruckfestigkeit), das Elastizitätsmodul nach 28 d gemäss Prüfnorm SN EN 12390-5, und die Biegezugfestigkeit nach 28 d gemäss Prüfnorm SN EN 12390-5. Die entsprechenden Resultate sind in den Figuren 4 bis 8 dargestellt. Die x-Achse zeigt jeweils die Probenummer, die y-Achse den Messwert. Die Zusammensetzung der Proben ist in einer Tabelle in Figur 9 dargestellt.

Bei Probe Nr. 29 handelt es sich um einen erfindungsgemässen Beton wie obenstehend beschrieben, mit der folgenden Zusammensetzung für 1 m³ Frischbeton gemäss der Tabelle 9:

**Tabelle 9:**

| **Bestandteil** | **Masse [kg]** |
|---|---|
| Feine Gesteinskörnung 0/1 mm | 171.00 |
| Feine Gesteinskörnung 0/4 mm | 701.00 |
| Grobe Gesteinskörnung 4/16 mm | 936.00 |
| Aktivator | 231.00 |
| Mineralischer Füllstoff | 154.00 |
| Kalksteinmehl *d*₉₇ < 10 µm | 15.50 |
| Kalksteinmehl *d*₉₇ < 45µm | 18.50 |
| Kalksteinmehl *d*₉₇ < 63 µm | 15.50 |
| Frischwasser | 121.00 |

Der W/B-Wert, also das Massenverhältnis zwischen wirksamem Wassergehalt W und anrechenbarem Bindemittel B beträgt W/B = 0.3. Das Ausbreitmass nach 0 min beträgt 540 mm, und nach 7 min 570 mm. Die Frischbetontemperatur betrug 7 °C. Die Würfeldruckfestigkeit nach 7 d betrug 16.9 MPa, nach 14Tagen 28.4 MPa und nach 28 d 37.5 MPa.

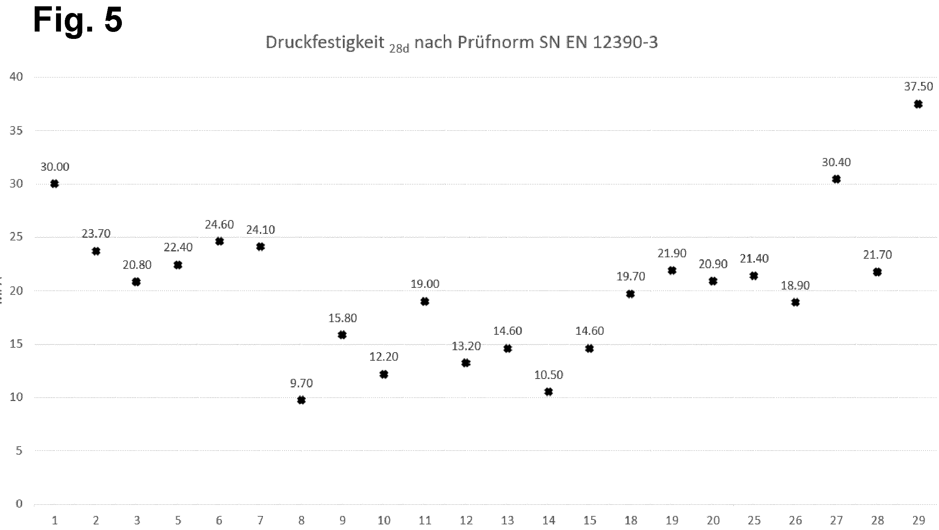

Wie aus Figur 5 ersichtlich ist, weist ein solcher erfindungsgemässer Beton Nr. 29 nach 28 Tagen eine Würfeldruckfestigkeit von 37.5 MPa auf, während ein mit Oxacrete Oulesse als zementlosem Bindemittel hergestellter Beton (Probe Nr. 1) 30.0 MPa erreicht.

## Patentansprüche

1. Bindermaterial zur Herstellung eines hydraulischen Bindemittels für die Herstellung von Baustoffen, insbesondere Beton, umfassend einen mineralischen Füllstoff, der aus einem Gesteinskörnungsgemisch aus Betongranulat und Ziegelgranulat gemahlen ist, wobei das Gewichtsverhältnis zwischen Betongranulat und Ziegelgranulat im Wesentlichen in einem Bereich von 45:65 bis 75:25 liegt.

2. Bindermaterial nach Anspruch 1, wobei das Gewichtsverhältnis zwischen Betongranulat und Ziegelgranulat im Wesentlichen in einem Bereich von 55:45 bis 65:35 liegt, insbesondere bei 60:40.

3. Bindermaterial nach Anspruch 1 oder 2, wobei die Partikelgrössenverteilung des mineralischen Füllstoffs einen Wert von *d*₉₇ < 120 µm, insbesondere *d*₉₇ < 100 µm aufweist.

4. Bindermaterial nach einem der Ansprüche 1 bis 3, wobei das Betongranulat und/oder das Ziegelgranulat, aus welchem der mineralische Füllstoff hergestellt ist, aus Rückbauten gewonnen ist.

5. Bindermaterial nach einem der Ansprüche 1 bis 4, wobei im mineralischen Füllstoff der Phasenanteil von Quarz mindestens 30 Gew.% beträgt; und/oder der Phasenanteil von Kalzit mindestens 40 Gew.% beträgt; und/oder der Phasenanteil von Albit mindestens 8 Gew.% beträgt; und/oder der Phasenanteil von Muscovit mindestens 3 Gew.% beträgt.

6. Hydraulisches Bindemittel zur Herstellung von Baustoffen, insbesondere Beton, umfassend ein Bindermaterial nach einem der Ansprüche 1 bis 5, und einen Aktivator, der dazu geeignet ist, latent-hydraulische Bestandteile des Bindermaterials zu aktivieren.

7. Hydraulisches Bindemittel nach Anspruch 6, wobei der Aktivator ausgewählt ist aus einer Gruppe bestehend aus Magnesiumoxid, Magnesiumhydroxid, Calciumoxid, Calciumhydroxid, Natriumhydroxid, Kaliumhydroxid, und Mischungen davon.

8. Hydraulisches Bindemittel nach Anspruch 6 oder 7, weiter umfassend eine Phosphatverbindung, insbesondere eine Polyphosphatverbindung, beispielsweise Natriumhexametaphosphat.

9. Hydraulisches Bindemittel nach einem der Ansprüche 6 bis 8, weiter umfassend einen Calciumcarbonat-Füllstoff, wobei das Gewichtsverhältnis zwischen dem Bindermaterial und dem Calciumcarbonat-Füllstoff ≤10:1, insbesondere ≤5:1, insbesondere 3:1, beträgt.

10. Hydraulisches Bindemittel nach Anspruch 9, wobei der Calciumcarbonat-Füllstoff aus drei Anteilen mit verschiedenen Partikelgrössenverteilungen besteht, mit einem ersten Anteil mit *d*₉₇ < 10 µm, mit einem zweiten Anteil mit *d*₉₇ < 45 µm, und einem dritten Anteil mit *d*₉₇ < 63 µm; und wobei vorteilhaft das Gewichtsverhältnis der drei Anteile des Calciumcarbonat-Füllstoffs jeweils paarweise im Wesentlichen in einem Bereich von 1.2:1 bis 0.8:1 liegt.

11. Kit zur Herstellung eines hydraulischen Bindemittels zur Herstellung von Baustoffen, insbesondere Beton, umfassend eine Menge an Bindermaterial nach einem der Ansprüche 1 bis 5, und davon getrennt eine Menge eines Aktivators, der dazu geeignet ist, latent-hydraulische Bestandteile des Bindermaterials zu aktivieren.

12. Kit nach Anspruch 11, wobei das hydraulische Bindemittel ein hydraulisches Bindemittel nach einem der Ansprüche 6 bis 10 ist, und der Calciumcarbonat-Füllstoff getrennt vorliegt.

13. Verarbeitbarer Baustoff, insbesondere Beton, umfassend ein hydraulisches Bindemittel nach einem der Ansprüche 6 bis 10 und/oder ein hydraulisches Bindemittel hergestellt mit einem Kit nach Anspruch 11 oder 12, und Gesteinskörnung, und Zugabewasser.

14. Verarbeitbarer Baustoff nach Anspruch 13, wobei das Gewichtsverhältnis zwischen hydraulischem Bindemittel und Gesteinskörnung im Wesentlichen in einem Bereich von 1:4 bis 1:5 liegt, insbesondere im Wesentlichen in einem Bereich von 1:4.0 bis 1:4.3.

15. Verfahren zur Herstellung eines Baustoffs, insbesondere Beton, umfassend die Schritte:
- Bereitstellung einer bestimmten Menge Gesteinskörnung, einer bestimmten Menge hydraulischen Bindemittels nach einem der Ansprüche 6 bis 10, und einer bestimmten Menge Zugabewasser, wobei allenfalls vorhandener Calciumcarbonat-Füllstoff des hydraulischen Bindemittels separat bereitgestellt wird;
- optional, falls Calciumcarbonat-Füllstoff vorhanden ist, Trockenmischen der Gesteinskörnung und des Calciumcarbonat-Füllstoffs; und
- Nassmischen des Zugabewassers, des Aktivators und des Bindermaterials des hydraulischen Bindemittels, und der Gesteinskörnung inklusive allenfalls beigemischtem Calciumcarbonat-Füllstoff.
